# NEUE EUROPÄISCHE PATENTSCHRIFT

(11) **EP 1 118 428 B2**
(45) Veröffentlichungstag und Bekanntmachung des Hinweises auf die Entscheidung über den Einspruch: **15.10.2008**
(45) Hinweis auf die Patenterteilung: 02.03.2005
(21) Anmeldenummer: 00126877.0
(22) Anmeldetag: 07.12.2000
(51) Int. Cl.: B23Q 41/02, B23Q 39/04, B23Q 1/01, B23B 3/30

(54) **Drehmaschine**
Lathe
Tour

(30) Priorität: 13.12.1999 DE 19959961
(43) Veröffentlichungstag der Anmeldung: 25.07.2001
(73) Patentinhaber: Index-Werke GmbH & Co. KG Hahn & Tessky, 73730 Esslingen (DE)
(72) Erfinder: Hafla, Dietmar, 73666 Baltmannsweiler (DE); Haberkern, Anton, Dr., 73240 Wendlingen (DE); Gärtner, Michael, 71691 Freiburg a.N. (DE)
(74) Vertreter: Hoeger, Stellrecht & Partner Patentanwälte

(56) Entgegenhaltungen:
- DE-A- 3 337 198
- DE-A- 19 753 898
- JP-A- 1 228 701

## Beschreibung

Die Erfindung betrifft eine Drehmaschine umfassend ein Maschinengestell, eine erste Werkstückspindel mit einer ungefähr vertikal ausgerichteten ersten Spindelachse und einer ersten Werkstückaufnahme, ein erstes Schlittensystem zum Bewegen der ersten Werkstückspindel relativ zum Maschinengestell quer zu ihrer Spindelachse und in Richtung der Spindelachse, einen ersten Werkzeugträger zum Bearbeiten eines in der ersten Werkstückspindel aufgenommenen Werkstücks, eine zweite Werkstückspindel mit einer ungefähr vertikal ausgerichteten zweiten Spindelachse und einer, der ersten Werkstückaufnahme zugewandt angeordneten zweiten Werkstückaufnahme, ein zweites Schlittensystem zum Bewegen der zweiten Werkstückspindel relativ zum Maschinengestell quer zu ihrer Spindelachse, einen zweiten Werkzeugträger zum Bearbeiten des in der zweiten Werkstückspindel aufgenommenen Werkstücks, wobei die erste Werkstückspindel und die zweite Werkstückspindel durch Verfahren der Schlittensysteme quer zu den jeweiligen Spindelachsen in eine Übergabeposition bringbar sind, in welcher das Werkstück von einer der Werkstückspindeln direkt der anderen der Werkstückspindeln übergebbar ist.

Eine derartige Drehmaschine ist beispielsweise aus der DE-A-197 53 898 bekannt.

Bei derartigen Drehmaschinen ist jedoch das Maschinengestell aufwendig konzipiert.

Der Erfindung liegt daher die Aufgabe zugrunde, eine Drehmaschine der gattungsgemäßen Art derart zu verbessern, daß das Maschinengestell möglichst einfach und kostengünstig herstellbar ist.

Diese Aufgabe wird bei einer Drehmaschine der eingangs beschriebenen Art erfindungsgemäß durch die Merkmale des Anspruchs 1 gelöst.

Der Vorteil der erfindungsgemäßen Lösung ist darin zu sehen, daß die erfindungsgemäße Drehmaschine in Form zweier Module herstellbar ist, nämlich einerseits ein Modul umfassend das erste Maschinenbett mit dem ersten Schlittensystem und andererseits ein Modul umfassend das zweite Maschinenbett mit dem zweiten Schlittensystem, und somit keine Notwendigkeit besteht, beispielsweise einen Schlitten modulübergreifend zu bewegen.

Dadurch läßt sich die Fertigung der erfindungsgemäßen Drehmaschine erheblich rationalisieren.

Hinsichtlich der Verbindung zwischen dem ersten Maschinenbett und dem zweiten Maschinenbett wurden bislang keine näheren Angaben gemacht. So wäre es prinzipiell denkbar, das erste Maschinenbett und das zweite Maschinenbett nebeneinander in der gewünschten Ausrichtung aufzustellen und relativ zueinander fixieren.

Dabei wäre es beispielsweise denkbar, das erste Maschinenbett und das zweite Maschinenbett unmittelbar miteinander zu verbinden, wobei diese Verbindung auch eine schwingungsdämpfende Verbindung sein kann.

Um jedoch die erfindungsgemäße Aufteilung der Drehmaschine in zwei Module konsequent ausnützen zu können, insbesondere auch für die Frage der Entkopplung der Werkstückspindeln bei der Bearbeitung, ist es besonders vorteilhaft, wenn das erste und das zweite Maschinenbett berührungsfrei und frei von einer unmittelbaren Verbindung zueinander angeordnet sind, so daß sich beispielsweise Schwingungen und thermische Einflüsse zwischen den Maschinenbetten nicht direkt übertragen.

Eine besonders günstige Art der Aufstellung des ersten und des zweiten Maschinenbetts relativ zueinander sieht vor, daß das erste und das zweite Maschinenbett auf einem gemeinsamen Untergestell sitzen.

Ein derartiges gemeinsames Untergestell kann dazu eingesetzt werden, die Maschinenbetten relativ zueinander zu positionieren, wobei es denkbar ist, die Maschinenbetten noch untereinander zu verbinden oder berührungsfrei zueinander anzuordnen.

Besonders vorteilhaft ist es jedoch, wenn das erste und das zweite Maschinenbett ausschließlich über das Untergestell relativ zueinander positioniert sind.

Hinsichtlich der Ausbildung der Maschinenbetten selbst wurden im Zusammenhang mit der bisherigen Erläuterung der einzelnen Ansprüche keine näheren Ausführungen gemacht. So sieht ein vorteilhaftes Ausführungsbeispiel vor, daß das erste Maschinenbett ein sich quer zur ersten Spindelachse erstreckendes erstes Schlittenbett aufweist, längs welchem das erste Schlittensystem verfahrbar ist.

Ferner ist es in gleicher Weise vorteilhaft, wenn das zweite Maschinenbett ein sich quer zur zweiten Spindelachse erstreckendes zweites Schlittenbett aufweist, längs welchem das zweite Schlittensystem verfahrbar ist.

Gemäß der Erfindung sind die erste Schlittenführungsrichtung und die zweite Schlittenführungsrichtung so anzuordnen, daß die auf eine horizontale Ebene projizierten Schlittenführungsrichtungen in dieser horizontalen Ebene einen Winkel miteinander einschließen.

Prinzipiell wäre es bei einer derartigen Konzeption der Maschinenbetten ausreichend, diese so anzuordnen, daß die Schlittenbetten einander so weit nahe kommen, daß die an den jeweiligen Schlittensystemen angeordneten Werkstückspindeln in die Übergabeposition gebracht werden können.

Als besonders vorteilhaft hat es sich jedoch für die Stabilität und Präzision der Drehmaschine erwiesen, wenn das erste Schlittenbett und das zweite Schlittenbett einander übergreifend angeordnet sind, so daß die Werkstückspindeln an den Schlittensystemen nicht so angeordnet werden müssen, daß sie in der Übergabeposition in Richtung quer zur jeweiligen Spindelachse seitlich des jeweiligen Schlittenbetts angeordnet sind.

Prinzipiell wäre es dabei denkbar, die Schlittenbetten so anzuordnen, daß sie über nennenswerte Teilbereiche ihrerseits einander übergreifend angeordnet sind.

Eine hinsichtlich einer ausreichenden kompakten Bauweise und Entkopplung der Bearbeitungen vorteilhafte Lösung sieht vor, daß die Schlittenbetten mit einander zugewandten Endbereichen einander übergreifend angeordnet sind.

Hinsichtlich der Anordnung der Werkzeugträger relativ zu den Maschinenbetten wurden bislang keine näheren Angaben gemacht. So sieht ein vorteilhaftes Ausführungsbeispiel vor, daß das erste Maschinenbett ein Werkzeugträgerbett aufweist.

Dieses Werkzeugträgerbett kann relativ zum Schlittenbett des ersten Maschinenbetts beliebig angeordnet sein. Eine vorteilhafte Lösung sieht vor, daß das Werkzeugträgerbett auf einer einer Stellfläche des Maschinenbetts zugewandten Seite des ersten Schlittenbetts angeordnet ist.

Besonders günstig ist es, wenn das Werkzeugträgerbett einen Fuß des ersten Maschinenbetts bildet, welcher das erste Schlittenbett trägt.

In gleicher Weise ist es zweckmäßig, wenn das zweite Maschinenbett ein Werkzeugträgerbett aufweist.

Vorzugsweise ist dabei vorgesehen, daß das Werkzeugträgerbett auf einer einer Stellfläche des zweiten Maschinenbetts abgewandten Seite des zweiten Schlittenbetts angeordnet ist.

Eine besonders günstige Lösung sieht dabei vor, daß das zweite Schlittenbett das Werkzeugträgerbett trägt.

Hinsichtlich der Anordnung der Werkzeugträger wurden im Zusammenhang mit der bisherigen Erläuterung der einzelnen Ausführungsbeispiele keine näheren Angaben gemacht. So sieht ein vorteilhaftes Ausführungsbeispiel vor, daß das Werkzeugträgerbett einen gegenüber diesem stationär angeordneten Werkzeugträger trägt, wobei unter einem derartigen stationären Werkzeugträger auch ein Werkzeugrevolver zu verstehen ist.

Eine weitere alternative Lösung eines derartigen stationären Werkzeugträgers sieht vor, daß dieser eine Werkzeugspindel für angetriebene Werkzeuge umfaßt.

Ein derartiger stationärer Werkzeugträger setzt jedoch voraus, daß die mit diesem zusammenwirkende Werkstückspindel nicht nur quer zur Spindelachse, sondern auch in Richtung der Spindelachse bewegbar ist, um die Bearbeitung des Werkstücks vorteilhaft durchführen zu können.

Alternativ zum Vorsehen eines stationären Werkzeugträgers ist vorgesehen, daß das Werkzeugträgerbett ein Bett für ein Werkzeugträgerführungssystem bildet.

Ein derartiges Werkzeugträgerführungssystem kann im einfachsten Fall so ausgebildet sein, daß es eine Bewegbarkeit des Werkzeugträgers in Richtung der Spindelachse vorsieht, insbesondere dann, wenn die Werkstückspindel so von dem entsprechenden Schlittensystem geführt ist, daß diese relativ zum Maschinengestell nicht in Richtung ihrer Spindelachse bewegbar ist.

Um komplexere Bearbeitungen, insbesondere eine Fertigbearbeitung von Werkstücken vornehmen zu können, ist vorzugsweise vorgesehen, daß das Werkzeugträgerführungssystem eine Bewegung des Werkzeugträgers quer zur Spindelachse und auch quer zur Schlittenführungsrichtung des die Werkstückspindel tragenden Schlittensystems in Richtung quer zur Spindelachse vorsieht.

Eine derartige Bewegbarkeit des Werkzeugträgers wird üblicherweise als Y-Achse bezeichnet.

Darüber hinaus ist es vorteilhaft, wenn das Werkzeugträgerführungssystem eine Drehung des Werkzeugträgers um eine quer zur Spindelachse verlaufende Achse, eine sogenannten B-Achse vorsieht. In diesem Fall sind insbesondere komplexe Fräsbearbeitungen an dem Werkstück durchführbar.

Bei der erfindungsgemäßen Drehmaschine ist vorzugsweise vorgesehen, daß die erste Werkstückspindel eine hängend angeordnete Werkstückaufnahme vorsieht, so daß insbesondere mit der ersten Werkstückspindel aufgrund der Bewegbarkeit derselben in Richtung parallel zu der Spindelachse durch das erste Schlittensystem die Möglichkeit gegeben ist, in einer hierzu vorgesehenen Position Werkstücke von einer Werkstückzufuhreinrichtung aufzunehmen oder auf einer Werkstücktransportvorrichtung fertig bearbeitete Werkstücke abzulegen.

In gleicher Weise ist vorzugsweise die zweite Werkstückspindel - zumindest im einfachsten Fall einer derartigen erfindungsgemäßen Drehmaschine - nicht in Richtung ihrer Spindelachse bewegbar, jedoch quer zur Spindelachse in eine Position verfahrbar, in welcher ein Werkstück entweder entnommen oder ein rohes Werkstück eingesetzt wird.

Bei Einsatz eines erfindungsgemäßen Werkzeugträgerführungssystems kann der Werkzeugträger in unterschiedlichster Art und Weise ausgebildet sein. Eine Möglichkeit sieht vor, daß dieser ein Gehäuse aufweist, an welchem ein drehbarer Werkzeugrevolverkopf angeordnet ist.

Eine andere Lösung sieht vor, daß an dem Gehäuse stationär eine Werkzeugspindel für ein rotierend angetriebenes Werkzeug angeordnet ist.

Es ist aber auch denkbar, an dem Gehäuse sowohl einen drehbaren Werkzeugrevolverkopf anzuordnen, als auch eine Werkzeugspindel.

Vorzugsweise sind in diesem Fall die Drehachse des Werkzeugrevolverkopfes und die Achse, um welche das in die Werkzeugspindel eingesetzte Werkzeug rotiert, parallel zueinander ausgerichtet.

Eine alternative Lösung hierzu sieht vor, daß an dem Gehäuse auf einander gegenüberliegenden Seiten jeweils ein Werkzeugrevolverkopf angeordnet ist, wobei die Werkzeugrevolverköpfe vorzugsweise unabhängig voneinander drehbar sind.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine Frontansicht eines ersten Ausführungsbeispiels einer nicht unter de, Anspruch 1 fallenden Drehmaschine;
- Fig. 2: einen Schnitt längs Linie 2-2 in Fig. 1;
- Fig. 3: eine Frontansicht ähnlich Fig. 1 mit Darstellung einer ersten Möglichkeit eines Werkzeugwechsels;

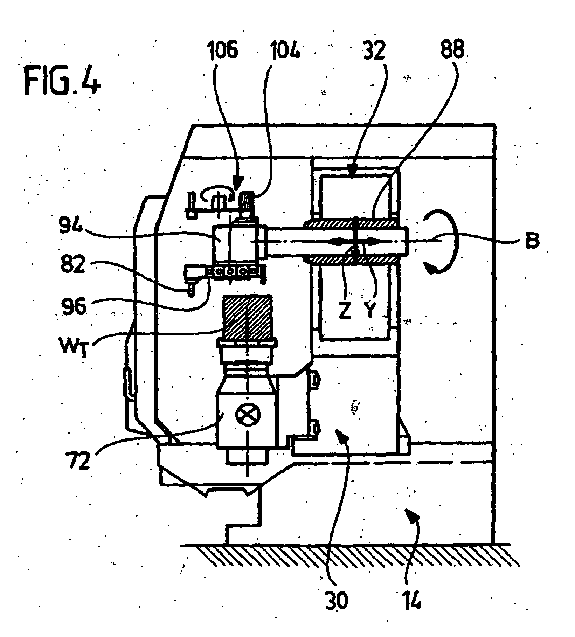

- Fig. 4: eine Ansicht entsprechend Fig. 2 mit Darstellung einer zweiten Möglichkeit eines Werkzeugwechsels;
- Fig. 5: eine Frontansicht ähnlich Fig. 1 eines zweiten Ausführungsbeispiels einer nicht unter den Anspruch 1 fallenden Drehmaschine;
- Fig. 6: eine Draufsicht in Richtung des Pfeils A in Fig. 5 auf das zweite Ausführungsbeispiel;
- Fig. 7: eine Frontansicht ähnlich Fig. 1 eines dritten Ausführungsbeispiels einer nicht unter den Anspruch 1 fallenden Drehmaschine;
- Fig. 8: eine Frontansicht ähnlich Fig. 1 eines vierten Ausführungsbeispiels einer nicht unter den Anspruch 1 fallenden Drehmaschine, mit gegenüber den vorangehenden Ausführungsbeispielen geänderter Form der Maschinenbetten; und
- Fig. 9: eine Draufsicht auf ein Ausführungsbeispiel einer erfindungsgemäßen Drehmaschine mit gegenüber dem ersten Ausführungsbeispiel im Winkel zueinander angeordneten Maschinenbetten.

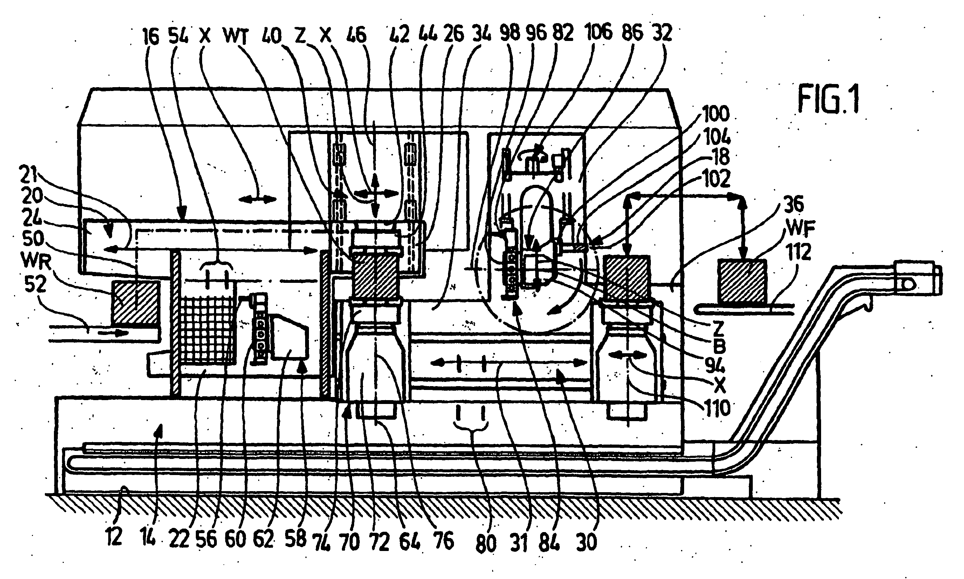

Ein Ausführungsbeispiel einer erfindungsgemäßen Drehmaschine, dargestellt in Fig. 1, umfaßt ein auf einer Stellfläche 12 aufsitzendes Untergestell 14, das seinerseits ein erstes Maschinenbett 16 und ein zweites Maschinenbett 18 trägt, die beide auf dem Untergestell 14 fixiert sind und somit über das Untergestell 14 starr miteinander verbunden sind, sich jedoch unmittelbar nicht aneinander abstützen.

Das erste Maschinenbett 16 umfaßt seinerseits ein erstes Schlittenbett 20, welches sich in einer ersten Schlittenführungsrichtung 21 erstreckt, die ungefähr in horizontaler Richtung verläuft und ein erstes Werkzeugträgerbett 22, wobei das Schlittenbett 20 und das Werkzeugträgerbett 22 vorzugsweise ein einstückiges Teil bilden.

Das erste Werkzeugträgerbett 22 bildet zweckmäßigerweise einen Fuß, der das erste Schlittenbett 20 trägt und der seinerseits mit dem Untergestell 14 verbunden ist.

Vorzugsweise erstreckt sich das erste Schlittenbett 20 in der Schlittenführungsrichtung 21 mit auskragenden Endbereichen 24 und 26 beiderseits über das zwischen diesen liegende erste Werkzeugträgerbett 22 hinaus, so daß das erste Maschinenbett 16 ungefähr T-förmig ausgebildet ist.

Das zweite Maschinenbett 18 umfaßt seinerseits ein zweites, Schlittenbett 30, welches sich in einer zweiten Schlittenführungsrichtung 31 erstreckt, die ungefähr in horizontaler Richtung verläuft, und ein zweites Werkzeugträgerbett 32, wobei das Schlittenbett 30 und das Werkzeugträgerbett 32 ebenfalls vorzugsweise ein einstückiges Teil bilden. Dabei ist das zweite Werkzeugträgerbett 32 auf einer dem Untergestell 14 abgewandten Seite des zweiten Schlittenbetts 30 angeordnet, so daß das zweite Schlittenbett 30 das zweite Werkzeugträgerbett 32 trägt.

Ferner erstreckt sich vorzugsweise das zweite Schlittenbett 30 mit beiderseits über das zweite Werkzeugträgerbett 32 überstehenden Endbereichen 34 und 36 über dieses hinaus, so daß das zweite Werkzeugträgerbett 32 zwischen den Endbereichen 34 und 36 liegt.

Vorzugsweise ruht das zweite Maschinenbett 18 mit dem zweiten Schlittenbett 30 unmittelbar auf dem Untergestell 14.

Auf dem ersten Schlittenbett 20 ist ein erstes Schlittensystem 40 gelagert, welches eine erste Werkstückspindel 42 mit hängend angeordneter Werkstückaufnahme 44 trägt, wobei eine erste Spindelachse 46 der ersten Werkstückspindel 42 im wesentlichen senkrecht zur Stellfläche 12 verläuft.

Das erste Schlittensystem 40 ist so ausgebildet, daß es auf dem ersten Schlittenbett 22 numerisch gesteuert in einer X-Richtung quer, vorzugsweise senkrecht zur erste Spindelachse 46 zwischen dem Endbereich 24 und dem Endbereich 26 verfahrbar ist und außerdem noch eine numerisch gesteuerte Bewegung der Werkstückspindel 42 in einer Z-Richtung parallel zur ersten Spindelachse 46 relativ zum ersten Maschinenbett 16 erlaubt.

Das erste Schlittensystem 40 ist erfindungsgemäß auf dem ersten Schlittenbett 20 so verfahrbar, daß es in dem Endbereich 24 des ersten Schlittenbetts 20 mit der Spindelachse 46 in einer Werkstückaufnahmeposition 50 steht, in welcher die erste Werkstückspindel 42 in der Lage ist, ein rohes Werkstück W_{R} dadurch zu greifen, daß durch Verfahren der ersten Werkstückspindel 42 in Z-Richtung mit der Werkstückaufnahme 44 das auf einer Werkstückzufuhreinrichtung 52 zugeführte Rohteil W_{R} unmittelbar gegriffen werden kann.

Anschließend ist durch Bewegen der ersten Werkstückspindel 42 mittels des ersten Schlittensystems 40 das rohe Werkstück W_{R} mit der Spindelachse 46 in eine oder mehrere Bearbeitungspositionen 54 bringbar, in welchen an dem Werkzeugträgerbett 22 angeordnete Werkzeuge 56 einsetzbar sind.

Beispielsweise sind derartige Werkzeuge 56 an einem Werkzeugträger 58 angeordnet und durch Drehen eines Revolverkopfes 60 des Werkzeugträgers 58 in eine für die Bearbeitung des rohen Werkstücks W_{R} geeignete Position bringbar.

Vorzugsweise ist dabei ein Revolvergehäuse 62 des Werkzeugrevolvers stationär an dem Werkzeugträgerbett 22 des ersten Maschinenbetts 16 angeordnet, so daß eine Relativbewegung zwischen dem rohen Werkstück W_{R} und dem Werkzeug 56 lediglich durch numerisch gesteuerte Bewegung der ersten Werkstückspindel 42 in X-Richtung und Z-Richtung erfolgt.

Nach Bearbeiten des rohen Werkstücks W_{R} ist dieses als teilweise bearbeitetes Werkstück W_{T} durch Verfahren der ersten Werkstückspindel 42 mittels des ersten Schlittensystems 40 mit der Spindelachse 46 in eine Übergabeposition 64 bringbar, in welcher das erste Schlittensystem 40 im Endbereich 26 des ersten Schlittenbetts 22 steht.

Vorzugsweise ist dabei das erste Schlittenbett 20 relativ zum zweiten Schlittenbett 30 so angeordnet, daß der Endbereich 26 des ersten Schlittenbetts 20 den Endbereich 34 des zweiten Schlittenbetts 30 übergreift.

Erfindungsgemäß ist an dem zweiten Schlittenbett 30 ein zweites Schlittensystem 70 angeordnet, mit welchem eine zweite Werkstückspindel 72 mit einer Werkstückaufnahme 74 und einer vertikal angeordneten zweiten Spindelachse 76 relativ zum zweiten Schlittenbett 30 verfahrbar ist und zwar zwischen dem Endbereich 34 und dem Endbereich 36.

Somit ist durch Verfahren des zweiten Schlittensystems 70 in den Endbereich 34 des zweiten Schlittenbetts 30 die zweite Werkstückspindel 72 ebenfalls in die Übergabeposition 64 bringbar, so daß beispielsweise durch Bewegen der ersten Werkstückspindel 42 in Z-Richtung ein unmittelbares Übergeben des teilweise bearbeiteten Werkstücks W_{T} von der ersten Werkstückspindel 42 in die zweite Werkstückspindel 72 ohne Übergabe- oder Handhabungsvorrichtung erfolgen kann, wobei insbesondere in der Übergabeposition 64 die Spindelachsen miteinander fluchten.

Durch Verfahren der zweiten Werkstückspindel 72 aus der Übernahmeposition 64 heraus ist das Werkstück W_{T} in eine oder mehreren Bearbeitungspositionen 80 der Spindelachse 76 bringbar, in welchen eine Bearbeitung des Werkstücks W_{T} mit Werkzeugen 82 eines Werkzeugträgers 84 erfolgen kann.

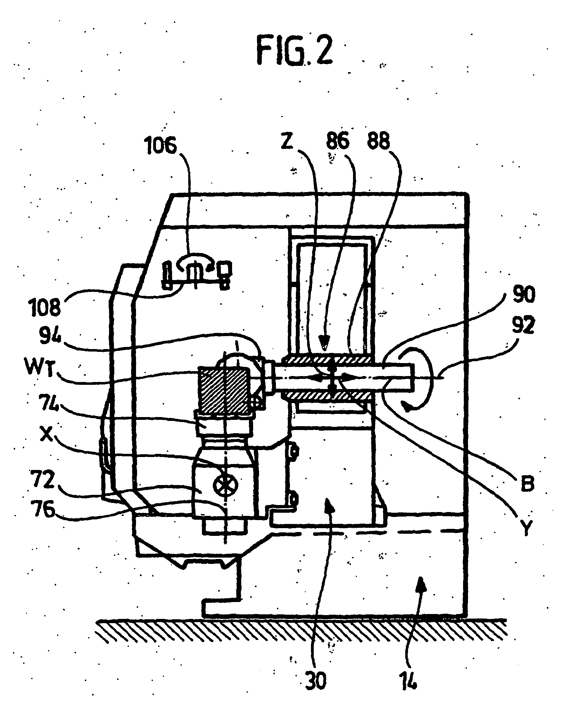

Vorzugsweise ist der Werkzeugträger 84, wie in Fig. 2 dargestell, seinerseits an einem Werkzeugträgerschlittensystem 86 gehalten, welches einen gegenüber dem Werkzeugträgerbett 32 in einer Z-Richtung parallel zur Spindelachse 76 numerisch gesteuert verfahrbaren Z-Schlitten 88 aufweist, gegenüber welchem eine Säule 90 in einer Y-Richtung senkrecht zur Spindelachse 76 und vorzugsweise senkrecht zur X-Richtung numerisch gesteuert verschiebbar und um ihre Längsachse 92 als B-Achse numerisch gesteuert drehbar ist, so daß insgesamt der Werkzeugträger 82 gegenüber dem Werkzeugträgerbett 32 in Richtung einer Z-Achse und einer Y-Achse linear bewegbar und um eine B-Achse drehbar ist.

Beispielsweise ist der Werkzeugträger 84 dabei so ausgebildet, daß er ein Gehäuse 94 aufweist, an welchem einerseits ein Revolverkopf 96 um eine Revolverachse 98 drehbar gelagert ist und an welchem andererseits eine Werkzeugspindel 100 gehalten ist, in welcher um eine zur Revolverachse 98 parallele Achse 102 rotierend angetriebene Werkzeuge 104 einsetzbar sind.

Vorzugsweise ist das rotierend angetriebene Werkzeug 104 ein Werkzeug, welches sich vom Gehäuse 94 des Werkzeugträgers 84 weg erstreckt, wobei die Achse 102, um welche das Werkzeug 104 rotierend angetrieben ist, gegenüber der Revolverachse parallel versetzt ist und zwar so, daß zur Bearbeitung des Werkstücks W_{T} in der Bearbeitungsposition 80 das Werkzeug 104 in Richtung der Z-Achse dem Werkstück W_{T} näher steht als das Gehäuse 94.

Vorzugsweise ist dabei zum Auswechseln der Werkzeuge 104 und 82 auf einer dem zweiten Schlittenbett 30 gegenüberliegenden Seite des Werkzeugträgers 84 ein Werkzeugmagazin 106 angeordnet, welches beispielsweise eine drehbare Magazinscheibe 108 umfaßt.

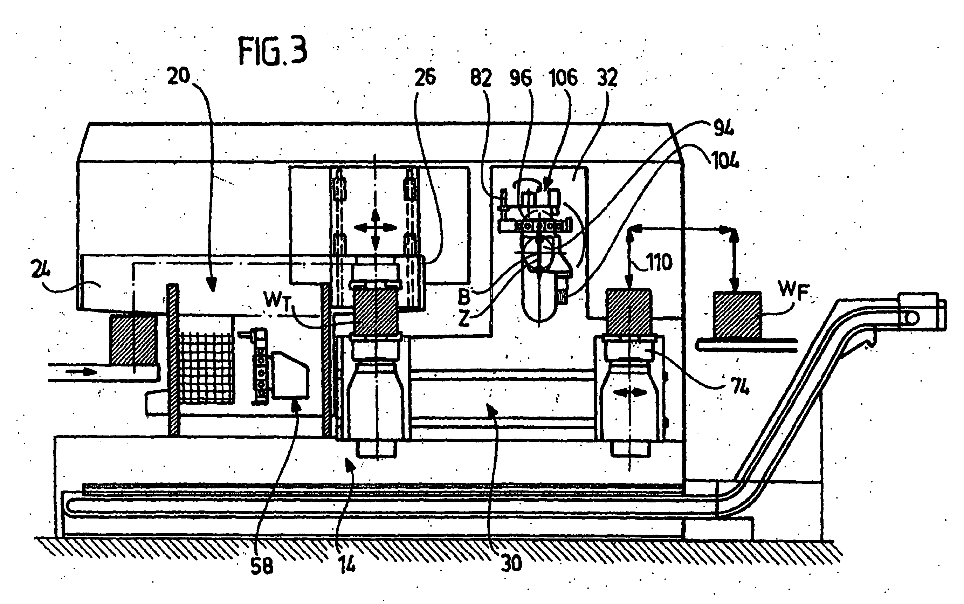

Durch Verfahren des gesamten Z-Schlittens 88 von dem Schlittenbett 30 weg in Richtung des Werkzeugmagazins 106 besteht somit die Möglichkeit, sowohl eines der Werkzeuge 82 des Revolverkopfes 96 durch ein anderes Werkzeug aus dem Werkzeugmagazin 106 auszuwechseln, wie in Fig. 3 dargestellt, oder auch die Möglichkeit, das rotierend angetriebene Werkzeug 104 gegen ein anderes Werkzeug aus dem Werkzeugmagazin 106 auszuwechseln.

Nach Fertigbearbeiten des Werkstücks wird das fertig bearbeitete Werkstück W_{F} durch Verfahren der Spindelachse des zweiten Schlittensystems 70 in den Endbereich 36 des zweiten Schlittenbetts 30 in eine Werkstückabgabeposition 110 gebracht, in welcher das fertig bearbeitete Werkstück W_{F}, beispielsweise durch einen zeichnerisch nicht dargestellten Greifer oder jede übliche Art von Handhabungsvorrichtung, aus der zweiten Werkstückspindel 72 entnehmbar und einer Werkstücktransporteinrichtung 112 übergebbar ist.

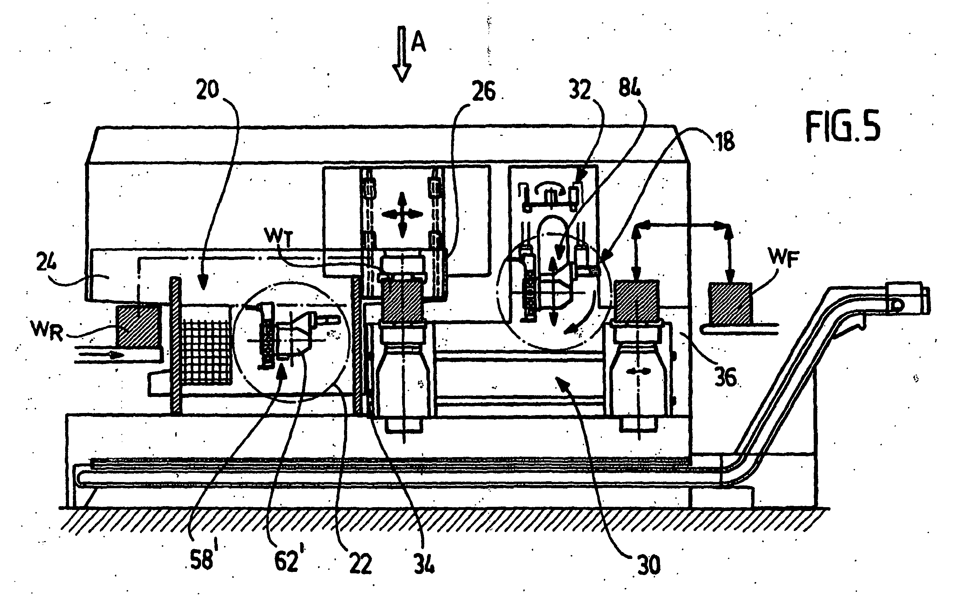

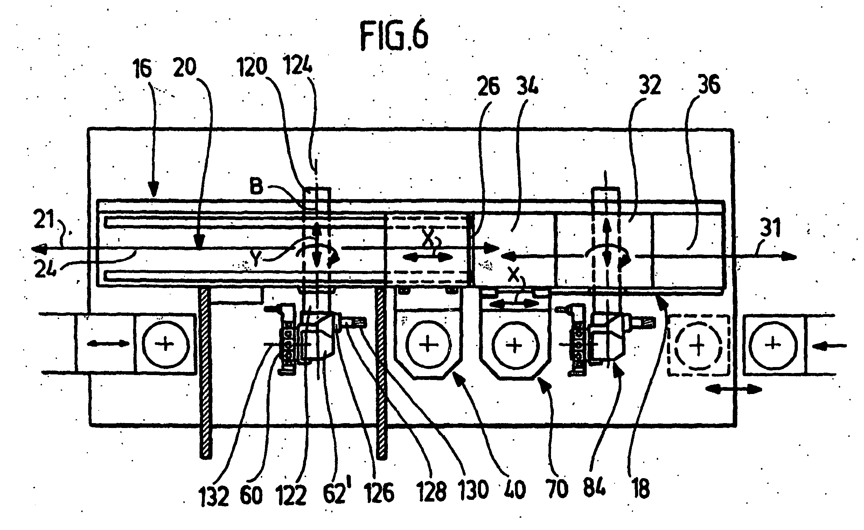

Bei einem zweiten Ausführungsbeispiel einer Drehmaschine, dargestellt in den Fig. 5 und 6 sind diejenigen Merkmale, die mit denen des ersten Ausführungsbeispiels identisch sind, mit denselben Bezugszeichen versehen, so daß hinsichtlich der Beschreibung der entsprechenden Teile auf die Ausführungen zum ersten Ausführungsbeispiel vollinhaltlich Bezug genommen werden kann.

Im Gegensatz zum ersten Ausführungsbeispiel ist beim zweiten Ausführungsbeispiel der Werkzeugträger 58' nicht mit einem stationär am Werkzeugträgerbett 22 gelagerten Revolvergehäuse 62 versehen, sondern mit einem Revolvergehäuse 62', das an einem vorderen Ende 122 einer Säule 120 gelagert ist, wobei die Säule 120 in dem Werkzeugträgerbett 22 in Richtung ihrer Längsachse 124 verschiebbar gelagert und antreibbar ist und außerdem um die Längsachse 124 drehbar ist.

Durch eine numerisch gesteuerte Bewegung in Richtung der Längsachse 124 ist somit eine eine Y-Achse darstellende numerisch gesteuerte Bewegung des Revolvergehäuses 62' möglich und durch eine numerisch gesteuerte Drehbewegung um die Längsachse 124 eine eine sogenannte B-Achse darstellende numerisch gesteuerte Bewegung.

Ferner ist vorzugsweise im Revolvergehäuse 62' noch eine dem Revolverkopf 60 gegenüberliegend angeordnete Werkzeugspindel 126 angeordnet, in welche um eine Achse 128 rotierend angetriebene Werkzeuge 130 einsetzbar sind, die sich von dem Revolvergehäuse 62' weg erstrecken und zwar in einer Richtung entgegengesetzt zum Revolverkopf 60.

Vorzugsweise erstreckt sich dabei die Achse 128 parallel zu einer Achse 132, um welche der Revolverkopf 60 drehbar ist, ist jedoch gegenüber dieser im Abstand versetzt angeordnet.

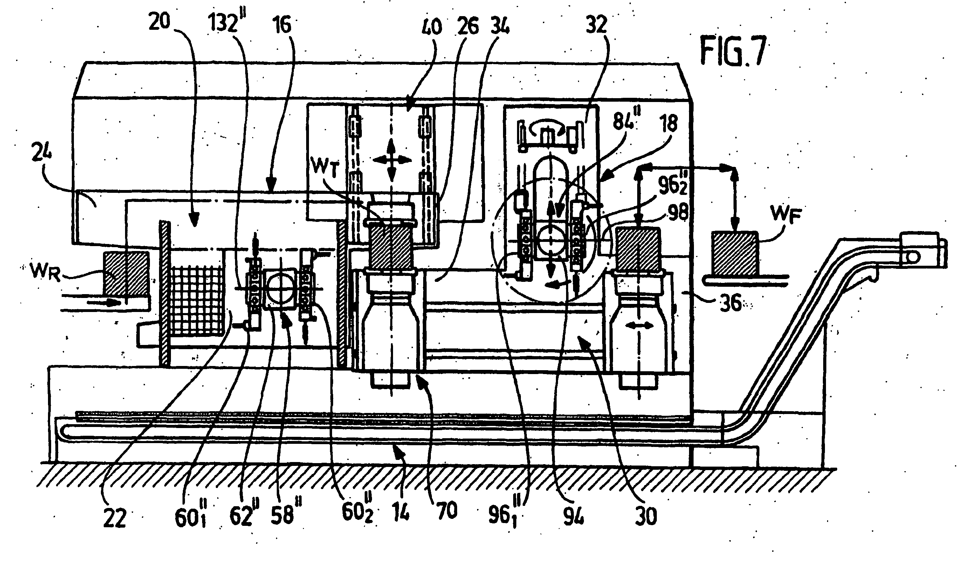

Bei einem dritten Ausführungsbeispiel einer Drehmaschine, dargestellt in Fig. 7, trägt ein Revolvergehäuse 62" des Werkzeugträgers 58" auf einander gegenüberliegenden Seiten jeweils einen Revolverkopf 60₁" und 60₂" die beide vorzugsweise um eine gemeinsame Achse 132", jedoch vorzugsweise unabhängig voneinander drehbar sind.

In gleicher Weise ist der Werkzeugträger 84" so ausgebildet, daß auf gegenüberliegenden Seiten des Gehäuses 94 Revolverköpfe 96₁" und 96₂" angeordnet sind, die ebenfalls um eine gemeinsame Revolverachse 98 drehbar, jedoch vorzugsweise unabhängig voneinander drehbar, an dem Gehäuse 94 gehalten sind.

Im übrigen ist das dritte Ausführungsbeispiel in gleicher Weise ausgebildet wie das erste Ausführungsbeispiel, so daß für dieselben Teile auch dieselben Bezugszeichen verwendet sind und somit hinsichtlich der Beschreibung derselben auf die Ausführungen zum ersten Ausführungsbeispiel vollinhaltlich Bezug genommen wird.

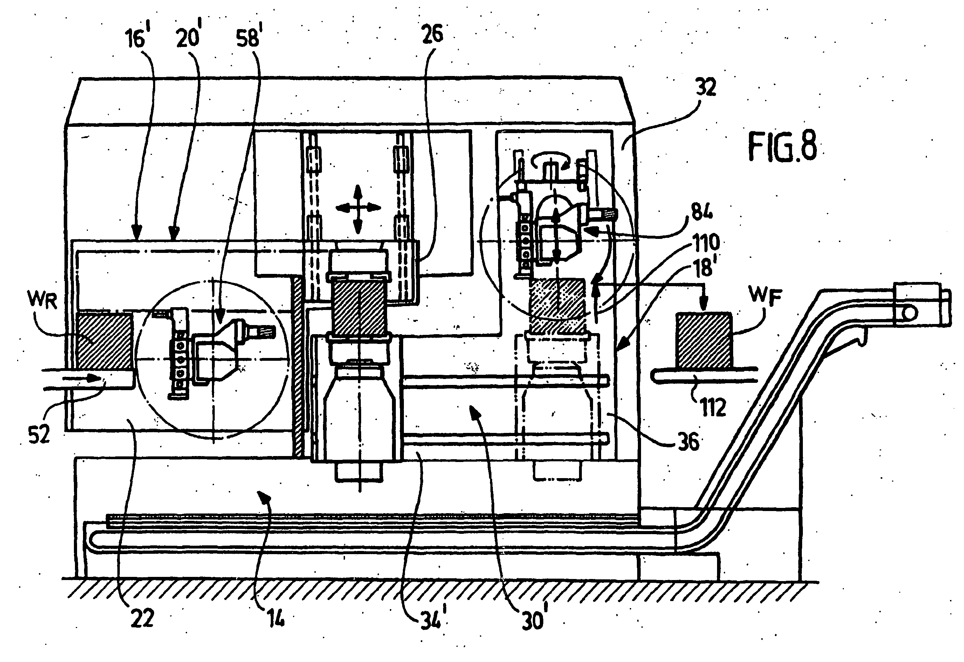

Bei einem vierten Ausführungsbeispiel einer Werkzeugmaschine, dargestellt in Fig. 8, ist das erste Maschinenbett 60' im wesentlichen ungefähr L-förmig ausgebildet, das heißt, daß sich das Schlittenbett 20 lediglich mit seinem Endbereich 26 über das Werkzeugträgerbett 22 hinaus erstreckt, während sich das Schlittenbett 20 in Richtung der Werkstückzufuhreinrichtung 52 nicht über das Werkzeugträgerbett 22 hinaus erstreckt.

In gleicher Weise ist das Schlittenbett 30' so ausgebildet, daß es sich lediglich mit dem Endbereich 34' über das Werkzeugträgerbett 32 in Richtung der Übergabeposition über dieses hinauserstreckt, während sich das Werkzeugträgerbett 32 bis zum Endbereich 36 des Schlittenbetts 30' erstreckt.

Damit ist die Entnahmeposition 110 noch im Bereich des Werkzeugträgerbetts 32 angeordnet, so daß eine Handhabung des fertig bearbeiteten Werkstücks W_{F} auf den Werkzeugträger 84 und das Werkzeugträgerbett 32 Rücksicht nehmen muß.

Desgleichen ist die Werkstückzufuhreinrichtung 52 so anzuordnen, daß eine Kollision mit dem Werkzeugträgerbett 22 vermieden wird.

Im übrigen ist das vierte Ausführungsbeispiel in gleicher Weise ausgebildet wie das erste Ausführungsbeispiel, so daß dieselben Teile mit denselben Bezugszeichen versehen sind und hinsichtlich der Erläuterungen derselben vollinhaltlich auf die Ausführungen zum ersten Ausführungsbeispiel oder dem zweiten Ausführungsbeispiel Bezug genommen wird.

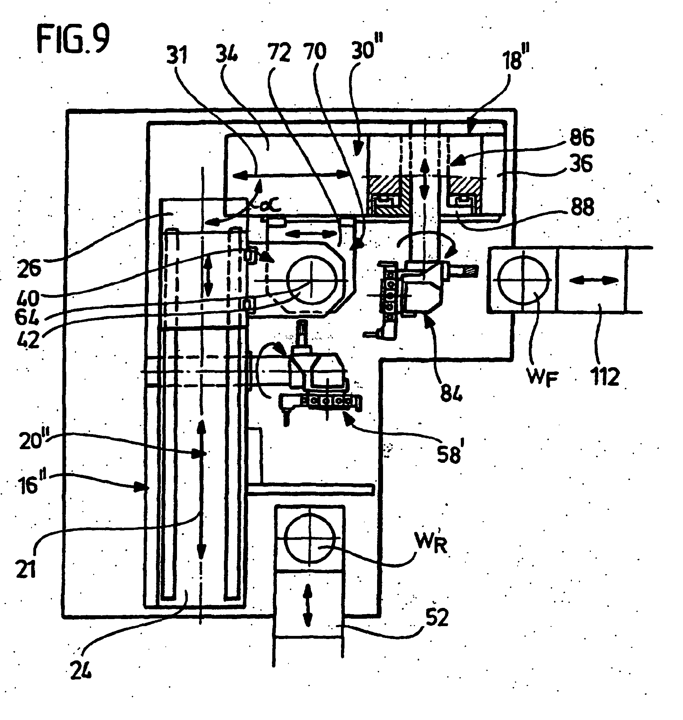

Bei einem fünften Ausführungsbeispiel, dargestellt in Fig. 9, sind die Maschinenbetten 16" und 18" so angeordnet, daß bei einer Projektion der ersten Schlittenführungsrichtung 21 und der zweiten Schlittenführungsrichtung 31 in eine horizontale Ebene diese Schlittenführungsrichtung 21 und 31 einen Winkel α miteinander einschließen, welcher kleiner als 180°, vorzugsweise im Bereich von ungefähr 90° liegt.

Bei dieser Konstellation ist es nicht zwingend notwendig, daß sich die Endbereiche 26 und 34 der Maschinenbetten 16" und 18" überlappen, es ist ausreichend, wenn in der Übergabeposition 64 die Werkstückspindel 42 und die Werkstückspindel 72 so angeordnet sind, daß die Spindelachsen 46 und 76 fluchtend zueinander stehen und somit eine unmittelbare Übergabe des teilweise bearbeiteten Werkstücks W_{T} von der Werkstückaufnahme 44 in die Werkstückaufnahme 74 möglich ist.

Damit besteht die Möglichkeit, durch den Winkel a zwischen den Schlittenführungsrichtungen 21 und 31 die erfindungsgemäße Drehmaschine kompakter aufzubauen.

Im übrigen ist das fünfte Ausführungsbeispiel gemäß Fig. 9 in gleicher Weise aufgebaut wie das erste und das zweite Ausführungsbeispiel, so daß auf die Beschreibung der einzelnen Teile derselben im Zusammenhang mit dem ersten und zweiten Ausführungsbeispiel vollinhaltlich Bezug genommen werden kann.

## Patentansprüche

1. Drehmaschine umfassend ein Maschinengestell (14, 16, 18), eine erste Werkstückspindel (42) mit einer ungefähr vertikal ausgerichteten ersten Spindelachse (46) und einer ersten Werkstückaufnahme (44), ein erstes Schlittensystem (40) zum Bewegen der ersten Werkstückspindel (42) relativ zum Maschinengestell (14) quer zu ihrer Spindelachse (46) und in Richtung der Spindelachse (46), einen ersten Werkzeugträger (58) zum Bearbeiten eines in der ersten Werkstückspindel (42) aufgenommenen Werkstücks (W), eine zweite Werkstückspindel (72) mit einer ungefähr vertikal ausgerichteten zweiten Spindelachse (76) und einer der ersten Werkstückaufnahme (44) zugewandt angeordneten zweiten Werkstückaufnahme (74), ein zweites Schlittensystem (70) zum Bewegen der zweiten Werkstückspindel (72) relativ zum Maschinengestell (14) quer zu ihrer Spindelachse (76), einen zweiten Werkzeugträger (84) zum Bearbeiten des in der zweiten Werkstückspindel (72) aufgenommenen Werkstücks (W), wobei die erste Werkstückspindel (42) und die zweite Werkstückspindel (72) durch Verfahren der Schlittensysteme (40, 70) quer zu den jeweiligen Spindelachsen (46, 76) in eine Übergabeposition (64) bringbar sind, in welcher das Werkstück (W) von einer der Werkstückspindein (42, 72) direkt der anderen der Werkstückspindeln (72, 42) übergebbar ist,
**dadurch gekennzeichnet, dass** das Maschinengestell (14, 16, 18) ein erstes Maschinenbett (16) und ein eine von diesem getrennte Baugruppe darstellendes zweites Maschinenbett (18) umfasst, dass das erste Schlittensystem (40) ausschließlich an dem ersten Maschinenbett (16) geführt ist, dass das erste Maschinenbett (16) ein sich quer zur ersten Spindelachse (46) in einer ersten Schlittenführungsrichtung (21) erstreckendes erstes Schlittenbett (20) aufweist, längs welchem das erste Schlittensystem (40) verfahrbar ist, dass das zweite Schlittensystem (70) ausschließlich an dem zweiten Maschinenbett (18) geführt ist, dass das zweite Maschinenbett (18) ein sich quer zur zweiten Spindelachse (76) in einer zweiten Schlittenführungsrichtung (31) erstreckendes zweites Schlittenbett (30) aufweist, längs welchem das zweite Schlittensystem (70) verfahrbar ist, und dass bei einer Projektion der ersten Schlittenführungsrichtung (21) und der zweiten Schlittenführungsrichtung (31) auf eine horizontale Ebene diese Schlittenführungsrichtungen (21, 31) einen Winkeln α miteinander einschließen, der im Bereich von ungefähr 90° liegt.

2. Drehmaschine nach Anspruch 1, **dadurch gekennzeichnet, dass** das erste (16) und das zweite Maschinenbett (18) berührungsfrei zueinander angeordnet sind.

3. Drehmaschine nach Anspruch 1 oder 2, **dadurch gekennzeichnet, dass** das erste (16) und das zweite Maschinenbett (18) auf einem gemeinsamen Untergestell (14) sitzen.

4. Drehmaschine nach Anspruch 3, **dadurch gekennzeichnet, dass** das erste (16) und das zweite Maschinenbett (18) ausschließlich über das Untergestell (14) relativ zueinander positioniert sind.

5. Drehmaschine nach einem der voranstehenden Ansprüche, **dadurch gekennzeichnet, dass** die Schlittenbetten (20, 30) so angeordnet sind, dass mit den Schlittensystemen (40, 70) die Werkstückspindeln (42, 72) in die Übergabeposition (64) bringbar sind.

6. Drehmaschine nach Anspruch 5, **dadurch gekennzeichnet, dass** das erste Schlittenbett (20) und das zweite Schlittenbett (30) einander übergreifend angeordnet sind.

7. Drehmaschine nach Anspruch 6, **dadurch gekennzeichnet, dass** die Schlittenbetten (20, 30) mit einander zugewandten Endbereichen (26, 34) einander übergreifend angeordnet sind.

8. Drehmaschine nach einem der voranstehenden Ansprüche, **dadurch gekennzeichnet, dass** das erste Maschinenbett (16) ein Werkzeugträgerbett (22) aufweist.

9. Drehmaschine nach Anspruch 8, **dadurch gekennzeichnet, dass** das Werkzeugträgerbett (22) auf einer einer Stellfläche (12) zugewandten Seite des ersten Schlittenbetts (20) angeordnet ist.

10. Drehmaschine nach Anspruch 9, **dadurch gekennzeichnet, dass** das Werkzeugträgerbett (22) einen Fuß des ersten Maschinenbetts (16) bildet, welcher das erste Schlittenbett (20) trägt.

11. Drehmaschine nach einem der voranstehenden Ansprüche, **dadurch gekennzeichnet, dass** das zweite Maschinenbett (18) ein Werkzeugträgerbett (32) aufweist.

12. Drehmaschine nach Anspruch 11, **dadurch gekennzeichnet, dass** das Werkzeugträgerbett (32) auf einer einer Stellfläche (12) abgewandten Seite des zweiten Schlittenbetts (30) angeordnet ist.

13. Drehmaschine nach Anspruch 12, **dadurch gekennzeichnet, dass** das zweite Schlittenbett (30) das Werkzeugträgerbett (32) trägt.

14. Drehmaschine nach einem der Ansprüche 8 bis 13, **dadurch gekennzeichnet, dass** das Werkzeugträgerbett (22) einen gegenüber diesem stationär angeordneten Werkzeugträger (58) trägt.

15. Drehmaschine nach einem der Ansprüche 8 bis 14, **dadurch gekennzeichnet, dass** das Werkzeugträgerbett (32) ein Bett für ein Werkzeugträgerführungssystem (86) bildet.

16. Drehmaschine nach einem der voranstehenden Ansprüche, **dadurch gekennzeichnet, dass** das Werkzeugträgerführungssystem (86) eine Bewegbarkeit des Werkzeugträgers (84) in Richtung der Spindelachse (76) vorsieht.

17. Drehmaschine nach einem der voranstehenden Ansprüche, **dadurch gekennzeichnet, dass** das Werkzeugträgerführungssystem (86) eine Bewegung des Werkzeugträgers (84) in einer Richtung (Y) quer zur Spindelachse (76) und auch quer zur Bewegung des die Werkstückspindel (72) tragenden Schlittensystems (70) vorsieht.

18. Drehmaschine nach einem der voranstehenden Ansprüche, **dadurch gekennzeichnet, dass** das Werkzeugträgerführungssystem (86) eine Drehung des Werkzeugträgers (84) um eine quer zur Spindelachse (76) verlaufende Achse (92) vorsieht.

## Claims

1. Lathe comprising a machine frame (14, 16, 18), a first workpiece spindle (42) with an approximately vertically aligned first spindle axis (46) and a first workpiece holder (44), a first carriage system (40) for moving the first workpiece spindle (42) relative to the machine frame (14) transversely to its spindle axis (46) and in the direction of the spindle axis (46), a first tool carrier (58) for machining a workpiece (W) received in the first workpiece spindle (42), a second workpiece spindle (72) with an approximately vertically aligned second spindle axis (76) and a second workpiece holder (74) arranged facing the first workpiece holder (44), a second carriage system (70) for moving the second workpiece spindle (72) relative to the machine frame (14) transversely to its spindle axis (76), a second tool carrier (84) for machining the workpiece (W) received in the second workpiece spindle (72), the first workpiece spindle (42) and the second workpiece spindle (72) being adapted to be brought into a transfer position (64) by driving the carriage systems (40, 70) transversely to the respective spindle axes (46, 76) and the workpiece (W) being adapted to be transferred directly from one of the workpiece spindles (42, 72) to the other one of the workpiece spindles (72, 42) in the transfer position (64), **characterized in that** the machine frame (14, 16, 18) comprises a first machine bed (16) and a second machine bed (18) constituting an assembly separate from the first machine bed (16), **in that** the first carriage system (40) is guided solely on the first machine bed (16), **in that** the first machine bed (16) comprises a first carriage bed (20) extending transversely to the first spindle axis (46) in a first carriage guiding direction (21), the first carriage system (40) being drivable along the first carriage bed (20), **in that** the second carriage system (70) is guided solely on the second machine bed (18), **in that** the second machine bed (18) comprises a second carriage bed (30) extending transversely to the second spindle axis (76) in a second carriage guiding direction (31), the second carriage system (70) being drivable along the second carriage bed (30), and **in that** when the first carriage guiding direction (21) and the second carriage guiding direction (31) are projected onto a horizontal plane, these carriage guiding directions (21, 31) include an angle α with each other, which lies in the range of approximately 90°.

2. Lathe as defined in claim 1, **characterized in that** the first machine bed (16) and the second machine bed (18) are arranged so as not to be in contact with each other.

3. Lathe as defined in claim 1 or 2, **characterized in that** the first machine bed (16) and the second machine bed (18) are seated on a common underframe (14).

4. Lathe as defined in claim 3, **characterized in that** the first machine bed (16) and the second machine bed (18) are positioned relative to each other solely via the underframe (14).

5. Lathe as defined in any one of the preceding claims, **characterized in that** the carriage beds (20, 30) are arranged such that the workpiece spindles (42, 72) can be brought into the transfer position (64) by means of the carriage systems (40, 70).

6. Lathe as defined in claim 5, **characterized in that** the first carriage bed (20) and the second carriage bed (30) are arranged so as to overlap each other.

7. Lathe as defined in claim 6, **characterized in that** the carriage beds (20, 30) are arranged so as to overlap each other with end areas (26, 34) facing each other.

8. Lathe as defined in any one of the preceding claims, **characterized in that** the first machine bed (16) comprises a tool carrier bed (22).

9. Lathe as defined in claim 8, **characterized in that** the tool carrier bed (22) is arranged on a side of the first carriage bed (20) facing a stand area (12).

10. Lathe as defined in claim 9, **characterized in that** the tool carrier bed (22) forms a foot of the first machine bed (16), which foot carries the first carriage bed (20).

11. Lathe as defined in any one of the preceding claims, **characterized in that** the second machine bed (18) comprises a tool carrier bed (32).

12. Lathe as defined in claim 11, **characterized in that** the tool carrier bed (32) is arranged on a side of the second carriage bed (30) facing away from a stand area (12).

13. Lathe as defined in claim 12, **characterized in that** the second carriage bed (30) carries the tool carrier bed (32).

14. Lathe as defined in any one of claims 8 to 13, **characterized in that** the tool carrier bed (22) carries a tool carrier (58) arranged stationarily relative to the tool carrier bed (22).

15. Lathe as defined in any one of claims 8 to 14, **characterized in that** the tool carrier bed (32) forms a bed for a tool carrier guiding system (86).

16. Lathe as defined in any one of the preceding claims, **characterized in that** the tool carrier guiding system (86) provides for a movability of the tool carrier (84) in the direction of the spindle axis (76).

17. Lathe as defined in any one of the preceding claims, **characterized in that** the tool carrier guiding system (86) provides for a movement of the tool carrier (84) in a direction (Y) transversely to the spindle axis (76) and also transversely to the movement of the carriage system (70) carrying the workpiece spindle (72).

18. Lathe as defined in any one of the preceding claims, **characterized in that** the tool carrier guiding system (86) provides for a rotation of the tool carrier (84) about an axis (92) extending transversely to the spindle axis (76).

## Revendications

1. Tour, comprenant un bâti de machine (14, 16, 18), une première broche porte-pièce (42) avec un premier axe de broche (46), orienté à peu près verticalement, et un premier logement de pièce d'oeuvre (44), un premier système de chariot (40) pour déplacer la première broche porte-pièce (42) par rapport au bâti de machine (14), transversalement par rapport à son axe de broche (46) et dans la direction de l'axe de broche (46), un premier système support d'outil (58) pour usiner une pièce d'oeuvre (W) logée dans la première broche porte-pièce (42), une deuxième broche porte-pièce (72), avec un deuxième axe de broche (76) orienté à peu près verticalement, et un deuxième logement de pièce d'oeuvre (74) tourné vers le premier logement de pièce d'oeuvre (44), un deuxième système de chariot (70) pour déplacer la deuxième broche porte-pièce (72) par rapport au bâti de machine (14), transversalement par rapport à son axe de broche (76), un deuxième support d'outil (84) pour usiner la pièce d'oeuvre (W) logée dans la deuxième broche porte-pièce (72), la première broche porte-pièce (42) et la deuxième broche porte-pièce (72) étant susceptibles d'être placées en une position de transfert (64), par un déplacement des systèmes de chariot (40, 70) transversalement par rapport aux axes de broche (46, 76) respectifs, position de transfert dans laquelle la pièce d'oeuvre (W) est susceptible d'être transférée directement d'une des broches porte-pièces (42, 72) à l'autre des broches porte-pièces (72, 42),
**caractérisé en ce que** le bâti de machine (14, 16, 18) comprend un premier banc de machine (16) et un deuxième banc de machine (18), constituant un groupe séparé de celui-ci, **en ce que** le premier système de chariot (40) est guidé exclusivement sur le premier banc de machine (16), **en ce que** le premier banc de machine (16) présente un premier banc de chariot (20) s'étendant transversalement par rapport au premier axe de broche (46) dans une première direction de guidage de chariot (21), banc de chariot le long duquel le premier système de chariot (40) est déplaçable, **en ce que** le deuxième système de chariot (70) est guidé exclusivement sur le deuxième banc de machine (18), **en ce que** le deuxième banc de machine (18) présente un deuxième banc de chariot (30), s'étendant transversalement par rapport au deuxième axe de broche (76), dans une deuxième direction de guidage de chariot (31), banc de chariot le long duquel le deuxième système de chariot (70) est déplaçable, et **en ce qu'**en cas de projection de la première direction de guidage de chariot (21) et de la deuxième direction de guidage de chariot (31) sur un plan horizontal, lesdites directions de guidage de chariot (21, 31) forment entre elles un angle α de l'ordre de 90 °.

2. Tour selon la revendication 1, **caractérisé en ce que** le premier (16) et le deuxième (18) bancs de machine sont disposés sans contact l'un par rapport à l'autre.

3. Tour selon la revendication 1 ou 2, **caractérisé en ce que** le premier (16) et le deuxième (18) bancs de machine sont montés sur un bâti inférieur (14) commun.

4. Tour selon la revendication 3, **caractérisé en ce que** le premier (16) et le deuxième (18) bancs de machine sont positionnés l'un par rapport à l'autre exclusivement par l'intermédiaire du bâti inférieur (14).

5. Tour selon l'une des revendications précédentes, **caractérisé en ce que** les bancs de chariot (20, 30) sont disposés de manière que les broches porte-pièces (42, 72) puissent être placées à la position de transfert (64) avec les systèmes de chariot (40, 70).

6. Tour selon la revendication 5, **caractérisé en ce que** le premier banc de chariot (20) et le deuxième banc de chariot (30) sont disposés en se chevauchant l'un l'autre.

7. Tour selon la revendication 6, **caractérisé en ce que** les bancs de chariot (20, 30) sont disposés en se chevauchant l'un l'autre par des zones d'extrémité (26, 34) tournées l'une vers l'autre.

8. Tour selon l'une des revendications précédentes, **caractérisé en ce que** le premier banc de machine (16) présente un banc support d'outil (22).

9. Tour selon la revendication 8, **caractérisé en ce que** le banc support d'outil (22) est disposé sur une face, tournée vers une face de réglage (12), du premier banc de chariot (20).

10. Tour selon la revendication 9, **caractérisé en ce que** le banc support d'outil (22) forme un pied du premier banc de machine (16) qui porte le premier banc de chariot (20).

11. Tour selon l'une des revendications précédentes, **caractérisé en ce que** le deuxième banc de machine (18) présente un banc support d'outil (32).

12. Tour selon la revendication 11, **caractérisé en ce que** le banc support d'outil (32) est disposé sur une face, opposée à une face de réglage (12), du deuxième banc de chariot (30).

13. Tour selon la revendication 12, **caractérisé en ce que** le deuxième banc de chariot (30) porte le banc support d'outil (32).

14. Tour selon l'une des revendications 8 à 13, **caractérisé en ce que** le banc support d'outil (22) porte un support d'outil (58), disposé de façon stationnaire par rapport à celui-ci.

15. Tour selon l'une des revendications 8 à 14, **caractérisé en ce que** le banc support d'outil (32) forme un banc pour un système de guidage de support d'outil (86).

16. Tour selon l'une des revendications précédentes, **caractérisé en ce que** le système de guidage de support d'outil (86) prévoit une mobilité du support d'outil (84) dans la direction de l'axe de broche (76).

17. Tour selon l'une des revendications précédentes, **caractérisé en ce que** le système de guidage de support d'outil (86) prévoit un déplacement du support d'outil (84) dans une direction (Y) transversale par rapport à l'axe de broche (76) et également transversale par rapport à la direction du système de chariot (70) portant la broche porte-pièce (72).

18. Tour selon l'une des revendications précédentes, **caractérisé en ce que** le système de guidage de support d'outil (86) prévoit une rotation du support d'outil (84) autour d'un axe (92) s'étendant transversalement par rapport à l'axe de broche (76).
